# EUROPEAN PATENT APPLICATION

(11) **EP 4 830 906 A1**
(43) Date of publication of application: **28.10.2026**
(21) Application number: 26158608.5
(22) Date of filing: 13.02.2026
(51) Int. Cl.: B29C 70/44, B25J 15/06, B65H 5/14, B64F 5/10

(54) **VACUUM COMPACTOR AND METHODS OF USE**

(30) Priority: 23.04.2025 US 202519187737
(71) Applicant: The Boeing Company, Arlington, VA 22202 (US)
(72) Inventor: Velasquez, Luis F., Arlington, 22202 (US)
(74) Representative: Arnold & Siedsma

(57) **Abstract**

A vacuum compactor and methods of use are presented. A vacuum compactor configured to pick and place composite members of different cross-sections comprises a vacuum control module, a number of releasable connectors associated with the vacuum control module actuable by an end effector comprising the vacuum control module, and a stringer interface module having a contact surface shape complementary to a composite member, configured to pick, place, and compress the composite member, and removably connectable to the vacuum control module by an end effector using the number of releasable connectors.

## Description

### BACKGROUND INFORMATION

### 1. Field:

The present disclosure relates generally to composite manufacturing and more specifically to a vacuum compactor and its use in composite manufacturing.

### 2. Background:

A preform for a composite part may be incapable of supporting itself when placed onto a sloped surface of a tool. In particular, placement of large preforms onto rigid tooling that exhibits a complex curvature can be complicated. This is because large preforms have an increased chance of peeling or shifting from tooling during or after placement. If the preforms are not quickly and firmly compacted onto a tool, then peeling may occur. Thus, it remains desirable to quickly and effectively move and secure preforms (and/or other objects) to complex surfaces.

Therefore, it would be desirable to have a method and apparatus that takes into account at least some of the issues discussed above, as well as other possible issues.

### SUMMARY

An example of the present disclosure provides a method of picking a composite member. A cross-sectional shape of a composite member to be placed onto a forming tool is determined. A stringer interface module compatible with the cross-sectional shape of the composite member is selected based on the cross-sectional shape of the composite member. The stringer interface module is automatically coupled to a vacuum control module of an end effector. The stringer interface module is engaged with the composite member.

The method may further comprise sending vacuum through the vacuum control module and into a first region of the stringer interface module to pick up the composite member. The method may further comprise placing the composite member into contact with a forming surface of a forming tool while maintaining vacuum in the first region of the stringer interface module. The method may further comprise sending vacuum through the vacuum control module and into a second region of the stringer interface module to compact the composite member against the forming surface of the forming tool. The method may further comprise releasing vacuum from both the first region and the second region, driving the end effector to a storage area, and decoupling the stringer interface module from the end effector to place the stringer interface module in the storage area. The method may further comprise decoupling the stringer interface module from the end effector after performing a pick and place operation using the stringer interface module, and automatically coupling a second stringer interface module having a different contact surface shape than the stringer interface module to the vacuum control module of the end effector. Automatically coupling the stringer interface module to the vacuum control module may comprise coupling using quick change connectors. Automatically coupling the stringer interface module to the vacuum control module may comprise magnetically coupling the stringer interface module to the vacuum control module. Automatically coupling the stringer interface module to the vacuum control module may comprise controlling a rotary locking mechanism by the end effector to couple the stringer interface module to the vacuum control module.

Another example of the present disclosure provides a method of placing a composite member. A stringer interface module is automatically coupled to a vacuum control module of an end effector. A composite member is placed in contact with a forming surface of a forming tool using the end effector while sending vacuum through the vacuum control module to a first region of the stringer interface module. The composite member is compacted against the forming tool by sending vacuum through the vacuum control module to a second region of the stringer interface module. The stringer interface module is automatically removed from the vacuum control module after compacting the composite member against the forming tool.

The method may further comprise automatically coupling a second stringer interface module having a different contact surface shape than the stringer interface module to the vacuum control module of the end effector. Automatically coupling the stringer interface module to the vacuum control module may comprise coupling using quick change connectors. Automatically coupling the stringer interface module to the vacuum control module may comprise magnetically coupling the stringer interface module to the vacuum control module. Automatically coupling the stringer interface module to the vacuum control module may comprise controlling a rotary locking mechanism by the end effector to couple the stringer interface module to the vacuum control module.

Yet another example of the present disclosure provides a method of picking and placing a composite member, comprising at least part of the methods of the preceding two examples. In other words, a method of picking and placing a composite member may comprise at least part of the method steps of the method of picking a composite member and the method of placing a composite member as described above. In an example, all steps of both methods are utilized to provide a method of picking and placing a composite member. For instance, the method of picking and placing a composite member may comprise automatically coupling the stringer interface module to a vacuum control module of an end effector, and placing a composite member in contact with a forming surface of a forming tool using the end effector while sending vacuum through the vacuum control module to a first region of the stringer interface module. The method of picking and placing the composite member may comprise, prior to the step of automatically coupling the stringer interface module to the vacuum control module of the end effector, selecting, based on the cross-sectional shape of the composite member, a stringer interface module compatible with the cross-sectional shape of the composite member. The method may further comprise, prior to the step of selecting, based on the cross-sectional shape of the composite member, the stringer interface module compatible with the cross-sectional shape of the composite member, determining a cross-sectional shape of a composite member to be placed onto a forming tool. The method may further comprise engaging the stringer interface module with the composite member. The method may further comprise, after the step of placing the composite member in contact with the forming surface of the forming tool using the end effector while sending vacuum through the vacuum control module to the first region of the stringer interface module, compacting the composite member against the forming tool by sending vacuum through the vacuum control module to a second region of the stringer interface module. The method may further comprise automatically removing the stringer interface module from the vacuum control module after compacting the composite member against the forming tool.

Yet another example of the present disclosure provides a vacuum compactor configured to pick and place composite members of different cross-sections. The vacuum compactor comprises a vacuum control module; a number of releasable connectors associated with the vacuum control module actuatable by an end effector comprising the vacuum control module; and a stringer interface module having a contact surface shape complementary to a composite member, configured to pick, place, and compress the composite member, and removably connectable to the vacuum control module by an end effector and using the number of releasable connectors. The vacuum control module may comprise a first region and a second region controllable to provide vacuum to different regions of the stringer interface module. The stringer interface module may comprise a first region configured to lift a composite member, and a second region configured to compact the composite member. The stringer interface module may comprise a raised face for an inlet of the second region. The number of releasable connectors may comprise at least one of quick change connectors, magnets, or a rotary locking mechanism. The contact surface shape may be complementary to a composite member having a hat-shaped cross-section.

Yet another example of the present disclosure provides a method of configuring an end effector. A stringer interface module to mate with a composite member having a cross-sectional shape is determined. The stringer interface module is automatically coupled to a vacuum control module of the end effector.

The method may further comprise selecting the stringer interface module from a plurality of stringer interface modules having varied contact surface shapes.

Yet another example of the present disclosure provides a method of picking a composite member, comprising determining a cross-sectional shape of a composite member to be placed onto a forming tool, executing the method of configuring an end effector according to the preceding example, and engaging the stringer interface module with the composite member.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a cross-sectional view of a vacuum compactor in accordance with an illustrative example;
**Figure 4** is an illustration of an isometric view of a vacuum control module moving towards a stringer interface module in accordance with an illustrative example;
**Figure 5** is an illustration of a cross-sectional view of a vacuum compactor in accordance with an illustrative example;
**Figures 6A** and **6B** are a flowchart of a method of picking up a composite member in accordance with an illustrative example;
**Figure 7** is a flowchart of a method of placing a composite member in accordance with an illustrative example;
**Figure 8** is a flowchart of a method of configuring an end effector in accordance with an illustrative example;
**Figure 9** is an illustration of an aircraft manufacturing and service method in a form of a block diagram in accordance with an illustrative example; and
**Figure 10** is an illustration of an aircraft in a form of a block diagram in which an illustrative example may be implemented.

### DETAILED DESCRIPTION

The illustrative examples recognize and take into account one or more different considerations. The illustrative examples provide high volume vacuum systems that quickly and effectively pick and place objects such as preforms onto complex surfaces and that compact the objects into place via vacuum. The illustrative examples utilize two-phase vacuum systems which operate a first portion to generate a suction hold for carrying an object to a tool and operate a second portion to generate a suction hold that compacts the object onto the tool. Compaction ensures that the object remains secured to the tool, regardless of the orientation of the tool.

The illustrative examples recognize and take into account that after placement using pick and place and compaction end effectors, the vacuum is shut off, but the retraction of the end effector away from the mandrel can work to facilitate a vacuum gripping. A vacuum gripping during retraction can pull the placed ply out of the desired location (shifting/disbonding). The illustrative examples provide a vacuum system end effector that enables a compacted stringer to stay in place better than the current stringer placement.

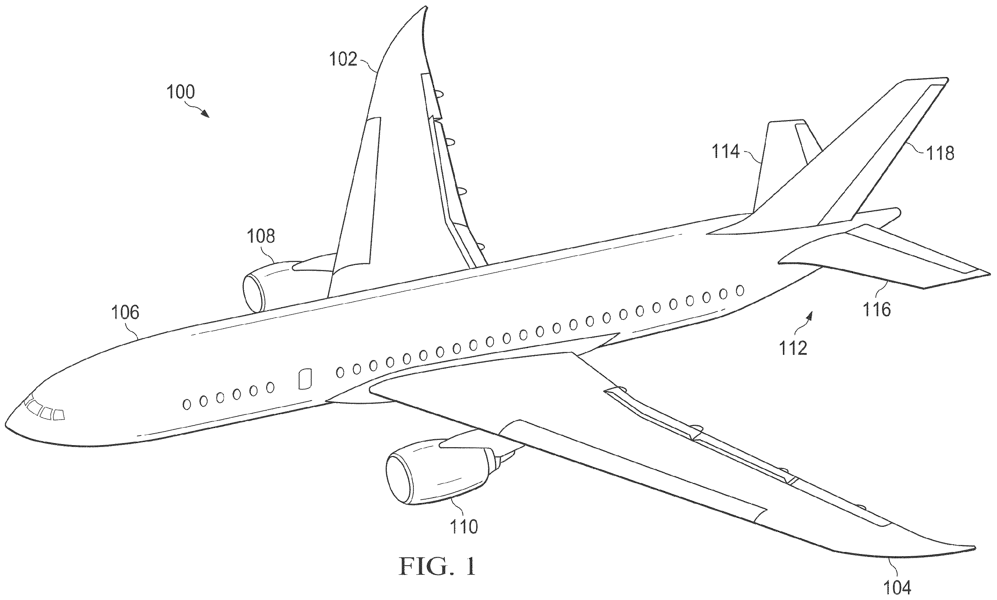

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite structures compacted using a vacuum compactor of the illustrative examples. In some illustrative examples, a composite stringer of wing **102,** wing **104,** or body **106** of aircraft **100** can be compacted using the methods of the illustrative examples.

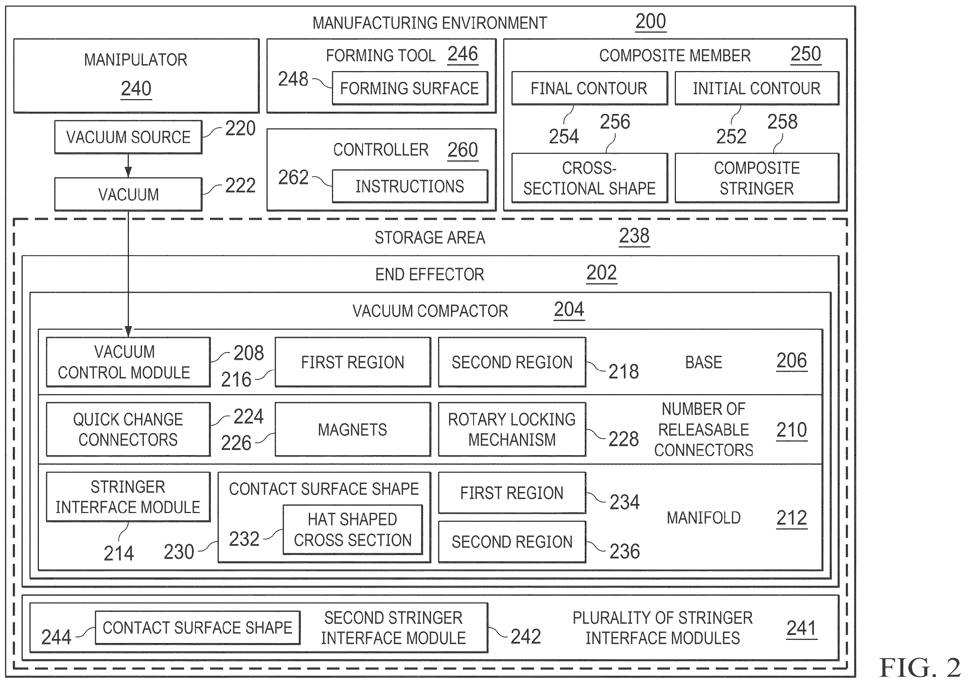

Turning now to **Figure 2****,** an illustration of a block diagram of a manufacturing environment is depicted in accordance with an illustrative example. Composite member **250 of** **Figure 2** can be a composite structure of aircraft **100 of** **Figure 1****.**

Composite member **250** can be picked and placed onto forming surface **248** of forming tool **246** using end effector **202.** End effector **202** can compact composite member **250** against forming tool **246.** By forming and compacting composite member **250** to forming surface **248** of forming tool **246,** the contour of composite member **250** changes from initial contour **252** to final contour **254.** In some illustrative examples, composite member **250** takes the form of composite stringer **258.** Composite member **250** has cross-sectional shape **256.** Cross-sectional shape **256** of composite member **250** is maintained throughout forming and compacting using end effector **202.**

End effector **202** comprises vacuum compactor **204.** Base **206** remains connected to end effector **202.** Base **206** can also be referred to as vacuum control module **208.**

Manifold **212** is removably connected to base **206.** Manifold **212** can also be referred to as stringer interface module **214.**

Vacuum compactor **204** is configured to pick and place composite member **250** and other composite members having different cross-sections. Vacuum compactor **204** comprises vacuum control module **208,** number of releasable connectors **210** associated with vacuum control module **208** actuatable by end effector **202** comprising vacuum control module **208,** and stringer interface module **214** having contact surface shape **230** complementary to composite member **250,** configured to pick, place, and compress composite member **250,** and configured to be coupled to and removed from vacuum control module **208** by end effector **202** and using number of releasable connectors **210.** Vacuum compactor **204** comprises vacuum control module **208,** number of releasable connectors **210** associated with vacuum control module **208** actuable by end effector **202** comprising vacuum control module **208,** and stringer interface module **214** having contact surface shape **230** complementary to composite member **250,** configured to pick, place, and compress composite member **250,** and removably connectable to vacuum control module **208** by end effector **202** and using number of releasable connectors **210.**

In this illustrative example, vacuum control module **208** comprises first region **216** and second region **218** controllable to provide vacuum to different regions of stringer interface module **214.**

In some illustrative examples, stringer interface module **214** comprises first region **234** configured to lift composite member **250,** and second region **236** configured to compact composite member **250.** In this illustrative example, contact surface shape **230** is configured to be complementary to cross-sectional shape **256.** In some illustrative examples, contact surface shape **230** is complementary to composite member **250** having hat-shaped cross-section **232.**

Second stringer interface module **242** can be coupled to vacuum control module **208** when stringer interface module **214** is decoupled from vacuum control module **208.** Second stringer interface module **242** has contact surface shape **244** different from contact surface shape **230.** Contact surface shape **244** is configured to be complementary to a composite member having a different cross-sectional shape from cross-sectional shape **256.**

Number of releasable connectors **210** comprises any desirable type of connector. In some illustrative examples, number of releasable connectors **210** comprises at least one of quick change connectors **224,** magnets **226,** or rotary locking mechanism **228.** In some illustrative examples, stringer interface module **214** is coupled to vacuum control module **208** by vacuum.

Vacuum **222** is provided to at least one of first region **234** or second region **236** of stringer interface module **214** by vacuum control module **208.** Vacuum control module **208** is provided vacuum **222** from vacuum source **220.** End effector **202** can be moved within manufacturing environment **200** by manipulator **240.** In some illustrative examples, manipulator **240** takes the form of a collaborative robot.

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, more than two stringer interface modules can be present in storage area **238.** In another illustrative example, stringer interface module **214** can have a different surface shape than hat shaped cross-section **232.**

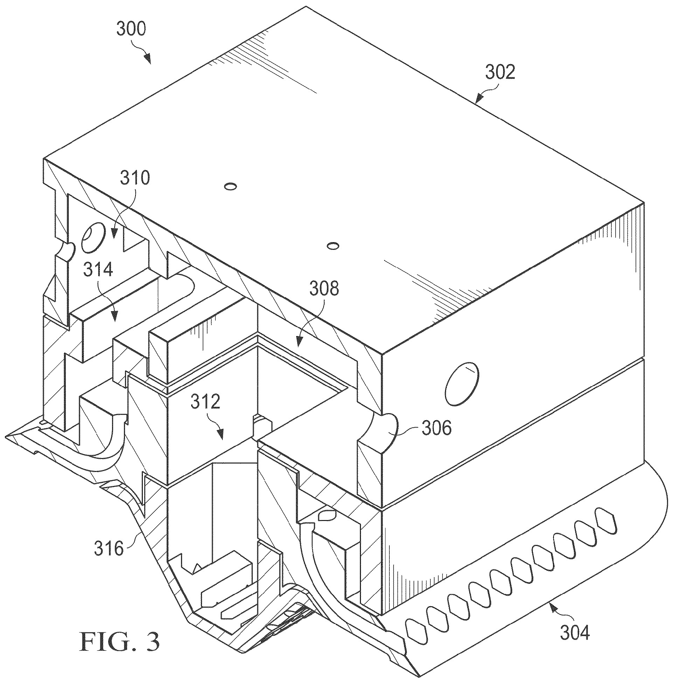

Turning now to **Figure 3****,** an illustration of a cross-sectional view of a vacuum compactor is depicted in accordance with an illustrative example. Vacuum compactor **300** can be a physical implementation of vacuum compactor **204** of **Figure 2****.**

Vacuum compactor **300** is configured to pick and place composite members of different cross-sections. Vacuum compactor **300** comprises vacuum control module **302** and stringer interface module **304.** Stringer interface module **304** has contact surface shape **316** complementary to a composite member, configured to place and compress the composite member, and removably connectable to vacuum control module **302** by an end effector and using the number of releasable connectors. In this illustrative example, contact surface shape **316** is complementary to a composite member having a hat-shaped cross-section. In this illustrative example, a number of releasable connectors (not depicted) is associated with vacuum control module **302** and is actuatable by an end effector comprising vacuum control module **302.** In some illustrative examples, the number of releasable connectors comprises at least one of quick change connectors, magnets, or a rotary locking mechanism. In some illustrative examples, stringer interface module **304** can be connected to vacuum control module **302** by vacuum.

Vacuum control module **302** comprises first region **308** and second region **310** controllable to provide vacuum to different regions of stringer interface module **304.** In this illustrative example, a vacuum source can provide vacuum to vacuum control module **302** via vacuum portion **306.** Vacuum can be selectively controlled to first region **308** and second region **310** by actuating portions of vacuum control module **302.** Stringer interface module **304** comprises first region **312** configured to lift a composite member, and second region **314** configured to compact the composite member.

In this illustrative example, stringer interface module **304** comprises a raised face for an inlet of second region **314.** In this illustrative example, the raised face can be used for indexing. In this illustrative example, the raised face can be used to connect second region **310** to second region **314.**

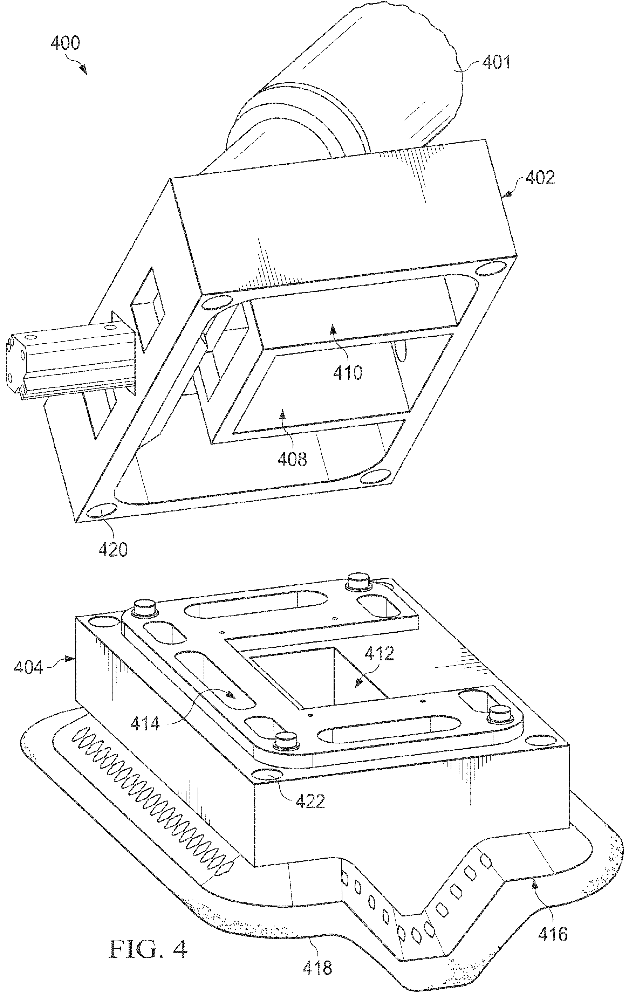

Turning now to **Figure 4****,** an illustration of an isometric view of a vacuum control module moving towards a stringer interface module is depicted in accordance with an illustrative example. Vacuum compactor **400** can be a physical implementation of vacuum compactor **204** of **Figure 2****.** In some illustrative examples, vacuum control module **402** is the same as vacuum control module **302** of **Figure 3****.** In some illustrative examples, stringer interface module **404** is the same as stringer interface module **304** of **Figure 3****.**

Vacuum compactor **400** is configured to pick and place composite members of different cross-sections. Vacuum compactor **400** comprises vacuum control module **402** and stringer interface module **404.** In this illustrative example, vacuum control module **402** is connected to manipulator **401.** In this illustrative example, manipulator **401** takes the form of a collaborative robot. Vacuum compactor **400** is an end effector configured to pick, place, and compact a composite member.

Stringer interface module **404** has contact surface shape **416** complementary to a composite member. Vacuum compactor **400** is configured to place and compress the composite member. Stringer interface module **404** is removably connectable to vacuum control module **402** by the end effector and using a number of releasable connectors. In this illustrative example, contact surface shape **416** is complementary to a composite member having a hat-shaped cross-section. In this illustrative example, number of releasable connectors **420** is associated with vacuum control module **402** and is actuatable by an end effector comprising vacuum control module **402.** In this illustrative example, number of releasable connectors **420** comprises magnets associated with vacuum control module **402.** In this illustrative examples, number of releasable connectors **420** is configured to connect to number of releasable connectors **422** in stringer interface module **404.** In this illustrative example, number of releasable connectors **422** comprises magnets.

In some illustrative examples, the number of releasable connectors comprises at least one of quick change connectors, magnets, or a rotary locking mechanism. In some illustrative examples, stringer interface module **404** can be connected to vacuum control module **402** by vacuum.

Vacuum control module **402** comprises first region **408** and second region **410** controllable to provide vacuum to different regions of stringer interface module **404.** In this illustrative example, a vacuum source can provide vacuum to vacuum control module **402** via a vacuum port. Vacuum can be selectively controlled to first region **408** and second region **410** by actuating portions of vacuum control module **402.** Stringer interface module **404** comprises first region **412** configured to lift a composite member and second region **414** configured to compact the composite member.

In this illustrative example, stringer interface module **404** comprises a raised face for an inlet of second region **414.** In this illustrative example, the raised face can be used for indexing. In this illustrative example, the raised face can be used to connect second region **410** to second region **414.**

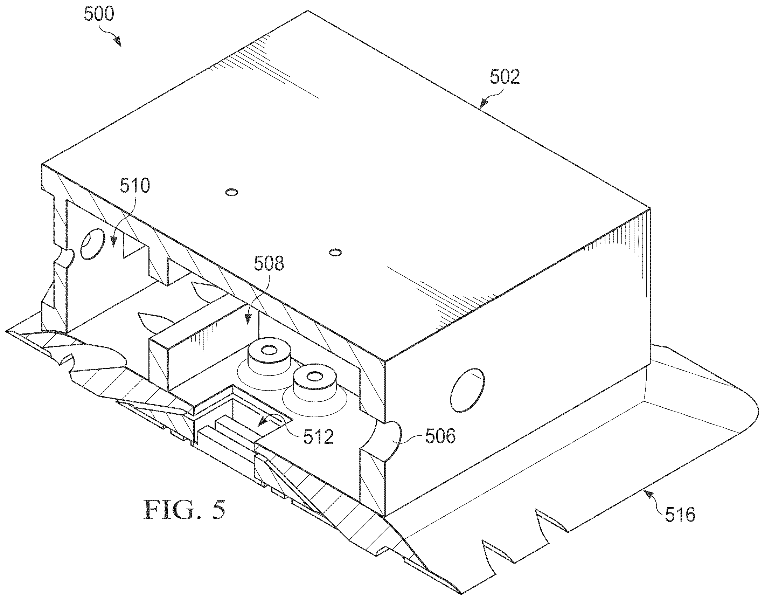

Turning now to **Figure 5****,** an illustration of a cross-sectional view of a vacuum compactor is depicted in accordance with an illustrative example. Vacuum compactor **500** can be a physical implementation of vacuum compactor **204** of **Figure 2****.** In some illustrative examples, vacuum control module **502** is the same as vacuum control module **302** of **Figure 3****.** In some illustrative examples, vacuum control module **502** can be the same as vacuum control module **402** of **Figure 4****.**

Vacuum compactor **500** is configured to pick and place composite members of different cross-sections. Vacuum compactor **500** comprises vacuum control module **502** and stringer interface module **504.** Stringer interface module **504** has contact surface shape **516** complementary to a composite member, configured to place and compress the composite member, and removably connectable to vacuum control module **502** by an end effector using the number of releasable connectors. In this illustrative example, contact surface shape **516** is complementary to a composite member having a flat surface. In this illustrative example, a number of releasable connectors (not depicted) is associated with vacuum control module **502** and is actuatable by an end effector comprising vacuum control module **502.** In some illustrative examples, the number of releasable connectors comprises at least one of quick change connectors, magnets, or a rotary locking mechanism. In some illustrative examples, stringer interface module **504** can be connected to vacuum control module **502** by vacuum.

Vacuum control module **502** comprises first region **508** and second region **510** controllable to provide vacuum to different regions of stringer interface module **504.** In this illustrative example, a vacuum source can provide vacuum to vacuum control module **502** via vacuum portion **506.** Vacuum can be selectively controlled to first region **508** and second region **510** by actuating portions of vacuum control module **502.** Stringer interface module **504** comprises first region **512** configured to lift a composite member, and second region **514** configured to compact the composite member.

In this illustrative example, stringer interface module **504** comprises a raised face for an inlet of second region **514.** In this illustrative example, the raised face can be used for indexing. In this illustrative example, the raised face can be used to connect second region **510** to second region **514.**

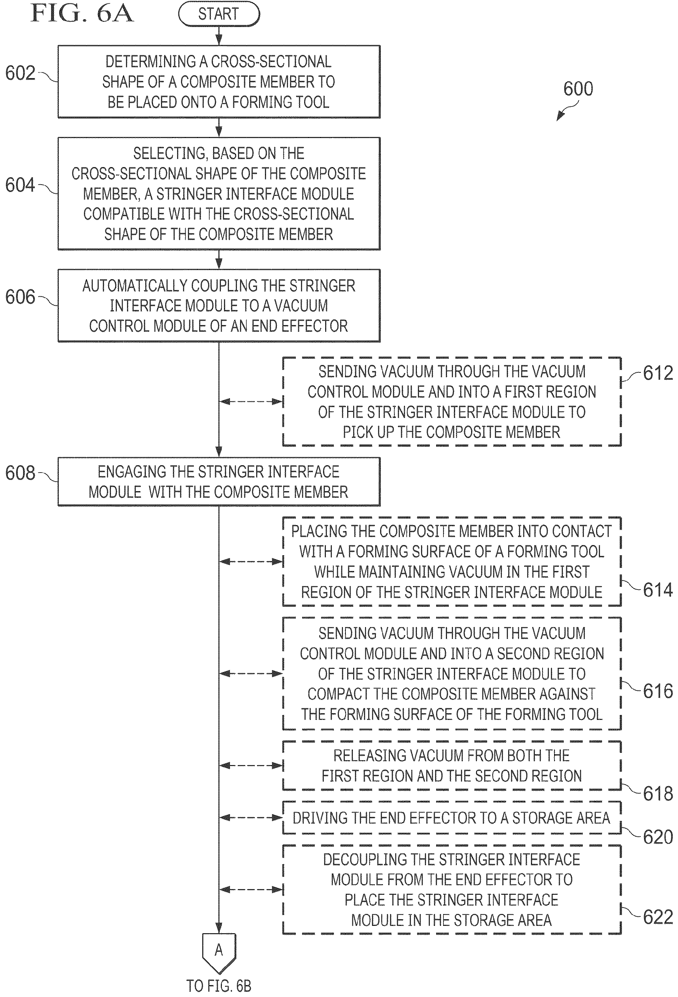

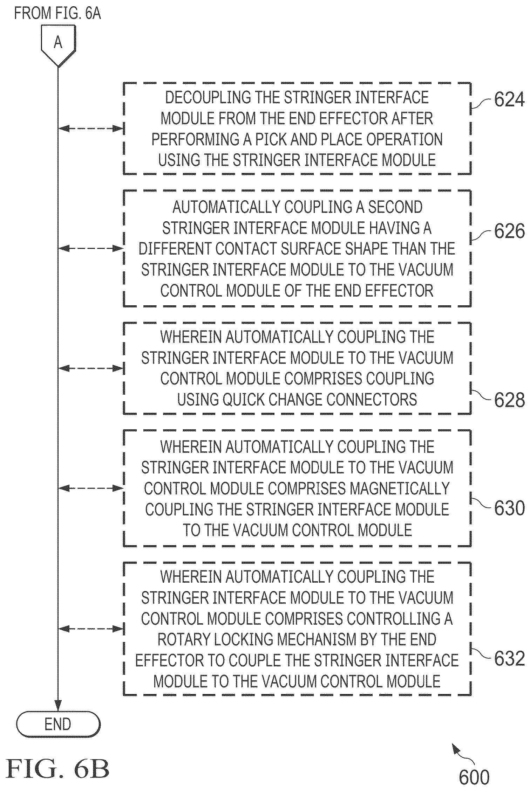

Turning now to **Figures 6A** and **6B****,** a flowchart of a method of picking up a composite member is depicted in accordance with an illustrative example. Method **600** can be performed using vacuum control module **208** and stringer interface module **214 of** **Figure 2****.** Method **600** can be performed using vacuum control module **302** and stringer interface module **304 of** **Figure 3****.** Method **600** can be performed using vacuum control module **402** and stringer interface module **404 of** **Figure 4****.** Method **600** can be performed using vacuum control module **502** and stringer interface module **504 of** **Figure 5****.**

Method **600** determines a cross-sectional shape of a composite member to be placed onto a forming tool (operation **602).** Method **600** selects, based on the cross-sectional shape of the composite member, a stringer interface module compatible with the cross-sectional shape of the composite member (operation **604).** Method **600** automatically couples the stringer interface module to a vacuum control module of an end effector (operation **606).** Method **600** engages the stringer interface module with the composite member (operation **608).** Afterwards, method **600** terminates.

In some illustrative examples, method **600** sends vacuum through the vacuum control module and into a first region of the stringer interface module to pick up the composite member (operation **612).** In some illustrative examples, method **600** places the composite member into contact with a forming surface of a forming tool while maintaining vacuum in the first region of the stringer interface module (operation **614).**

In some illustrative examples, method **600** sends vacuum through the vacuum control module and into a second region of the stringer interface module to compact the composite member against the forming surface of the forming tool (operation **616).**

In some illustrative examples, method **600** releases vacuum from both the first region and the second region (operation **618).** The vacuum can be released from the first region and the second region after placing and compacting the composite member using a vacuum compactor comprising the vacuum control module and the stringer interface module.

In some illustrative examples, method **600** drives the end effector to a storage area (operation **620).** In some illustrative examples, method **600** decouples the stringer interface module from the end effector to place the stringer interface module in the storage area (operation **622).** In some illustrative examples, method **600** decouples the stringer interface module from the end effector after performing a pick and place operation using the stringer interface module (operation **624).** In some illustrative examples, method **600** automatically couples a second stringer interface module having a different contact surface shape than the stringer interface module to the vacuum control module of the end effector (operation **626).**

In some illustrative examples, automatically coupling the stringer interface module to the vacuum control module comprises coupling using quick change connectors (operation **628).** In some illustrative examples, automatically coupling the stringer interface module to the vacuum control module comprises magnetically coupling the stringer interface module to the vacuum control module (operation **630).** In some illustrative examples, automatically coupling the stringer interface module to the vacuum control module comprises controlling a rotary locking mechanism by the end effector to couple the stringer interface module to the vacuum control module (operation **632).** In some illustrative examples, automatically coupling the stringer interface module to the vacuum control module comprises coupling the stringer interface module to the vacuum control module using vacuum. In some illustrative examples, an additional vacuum source is used to couple the vacuum control module to the stringer interface module.

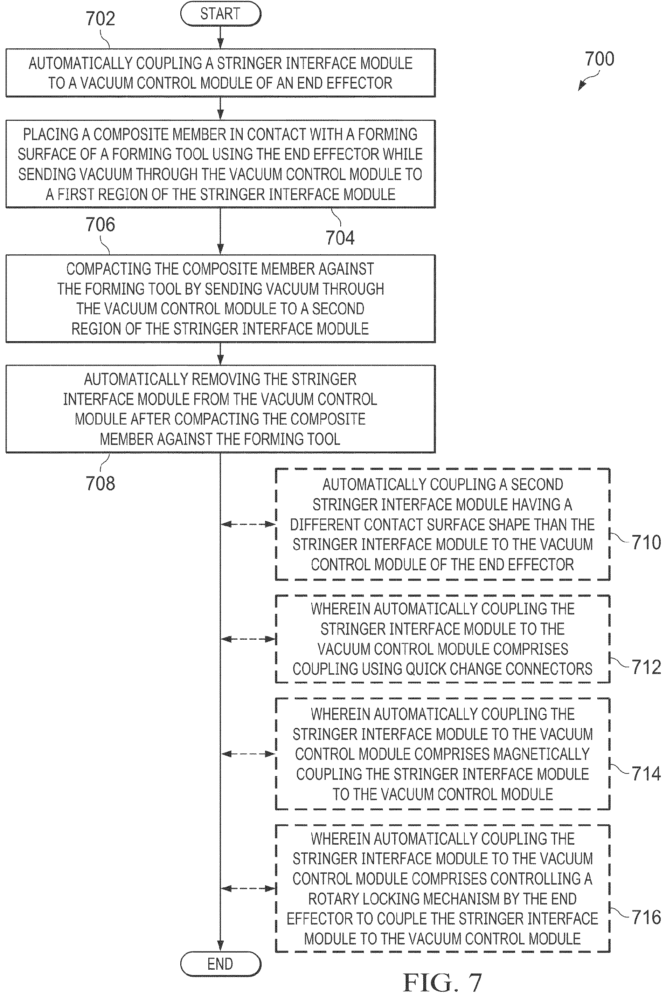

Turning now to **Figure 7****,** a flowchart of a method of placing a composite member is depicted in accordance with an illustrative example. Method **700** can be performed using vacuum control module **208** and stringer interface module **214** of **Figure 2****.** Method **700** can be performed using vacuum control module **302** and stringer interface module **304** of **Figure 3****.** Method **700** can be performed using vacuum control module **402** and stringer interface module **404** of **Figure 4****.** Method **700** can be performed using vacuum control module **502** and stringer interface module **504** of **Figure 5****.**

Method **700** automatically couples a stringer interface module to a vacuum control module of an end effector (operation **702).** Method **700** places a composite member in contact with a forming surface of a forming tool using the end effector while sending vacuum through the vacuum control module to a first region of the stringer interface module (operation **704).** Method **700** compacts the composite member against the forming tool by sending vacuum through the vacuum control module to a second region of the stringer interface module (operation **706).** Method **700** automatically removes the stringer interface module from the vacuum control module after compacting the composite member against the forming tool (operation **708).** Afterwards, method **700** terminates.

In some illustrative examples, method **700** automatically couples a second stringer interface module having a different contact surface shape than the stringer interface module to the vacuum control module of the end effector (operation **710).** In some illustrative examples, automatically coupling the stringer interface module to the vacuum control module comprises coupling the stringer interface module to the vacuum control module using vacuum. In some illustrative examples, an additional vacuum source is used to couple the vacuum control module to the stringer interface module.

In some illustrative examples, automatically coupling the stringer interface module to the vacuum control module comprises coupling using quick change connectors (operation **712).** In some illustrative examples, automatically coupling the stringer interface module to the vacuum control module comprises magnetically coupling the stringer interface module to the vacuum control module (operation **714).** In some illustrative examples, automatically coupling the stringer interface module to the vacuum control module comprises controlling a rotary locking mechanism by the end effector to couple the stringer interface module to the vacuum control module (operation **716).**

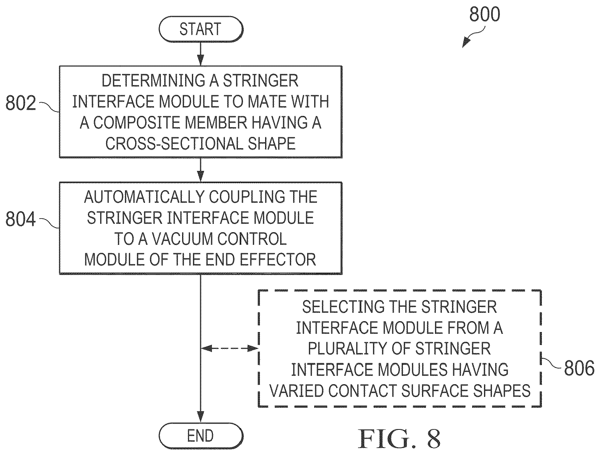

Turning now to **Figure 8****,** a flowchart of a method of configuring an end effector is depicted in accordance with an illustrative example. Method **800** can be performed using vacuum control module **208** and stringer interface module **214** of **Figure 2****.** Method **800** can be performed using vacuum control module **302** and stringer interface module **304** of **Figure 3****.** Method **800** can be performed using vacuum control module **402** and stringer interface module **404** of **Figure 4****.** Method **800** can be performed using vacuum control module **502** and stringer interface module **504** of **Figure 5****.**

Method **800** determines a stringer interface module to mate with a composite member having a cross-sectional shape (operation **802).** Method **800** automatically couples the stringer interface module to a vacuum control module of the end effector (operation **804).** Afterwards, method **800** terminates.

In some illustrative examples, method 800 selects the stringer interface module from a plurality of stringer interface modules having varied contact surface shapes (operation **806).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **612** through operation **632** may be optional. For example, operation **710** through operation **716** may be optional.

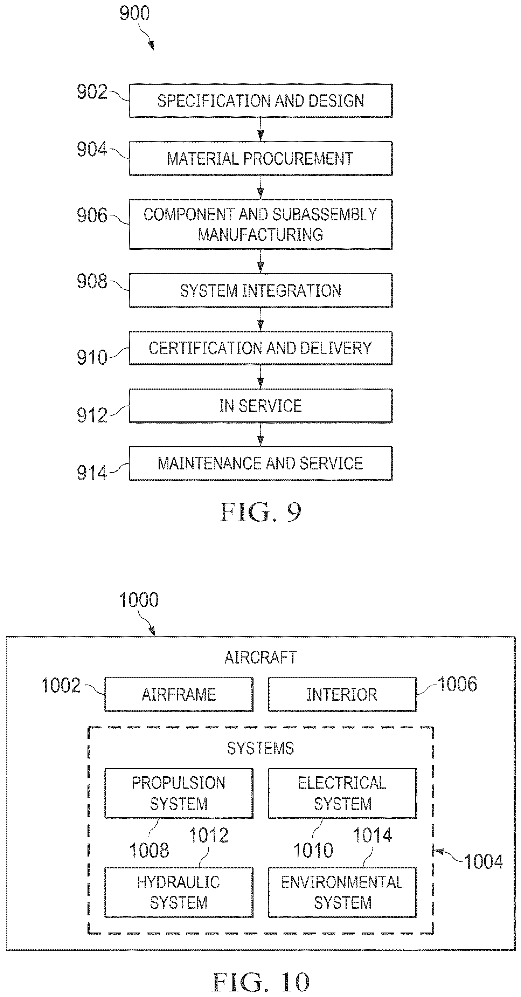

Illustrative examples of the present disclosure may be described in the context of aircraft manufacturing and service method **900** as shown in **Figure 9** and aircraft **1000** as shown in **Figure 10****.** Turning first to **Figure 9****,** an illustration of an aircraft manufacturing and service method in a form of a block diagram is depicted in accordance with an illustrative example. During preproduction, aircraft manufacturing and service method **900** may include specification and design **902** of aircraft **1000** in **Figure 10** and material procurement **904.**

During production, component and subassembly manufacturing **906** and system integration **908** of aircraft **1000** takes place. Thereafter, aircraft **1000** may go through certification and delivery **910** in order to be placed in service **912.** While in service **912** by a customer, aircraft **1000** is scheduled for routine maintenance and service **914,** which may include modification, reconfiguration, refurbishment, or other maintenance and service.

Each of the processes of aircraft manufacturing and service method **900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 10****,** an illustration of an aircraft in a form of a block diagram is depicted in which an illustrative example may be implemented. In this example, aircraft **1000** is produced by aircraft manufacturing and service method **900 of** **Figure 9** and may include airframe **1002** with plurality of systems **1004** and interior **1006.** Examples of systems **1004** include one or more of propulsion system **1008,** electrical system **1010,** hydraulic system **1012,** and environmental system **1014.** Any number of other systems may be included.

Apparatuses and methods embodied herein may be employed during at least one of the stages of aircraft manufacturing and service method **900.** One or more illustrative examples may be manufactured or used during at least one of component and subassembly manufacturing **906,** system integration **908,** in service **912,** or maintenance and service **914** of **Figure 9****.**

The illustrative examples provide an end effector design to enable the automated swapping of vacuum pick/compact tools used for different stringer types/shapes. An end effector of the illustrative examples comprises a permanent vacuum control module and interchangeable stringer interface modules.

The illustrative examples provide an end effector design to enable the automated swapping of vacuum pick/compact tools used for different stringer types/shapes. The illustrative examples comprise a locking mechanism between the permanent vacuum control module and an interchangeable stringer interface modules. In some illustrative examples, a locking mechanism comprises a magnet system or other locking mechanism. In some illustrative examples, a toolbox or other storage area comprises various interchangeable stringer interface modules.

The illustrative examples are configured to enable handling multiple stringer types. The illustrative examples provide an end effector with multiple stringer interface module designs that can interface with various stringers. The illustrative examples provide a vacuum control module designed to be permanently attached to an end effector mount. The illustrative examples provide stringer interface modules specific to respective stringer types designed to be able to be swapped in an automated manner.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. A method of picking a composite member comprising:
   determining a cross-sectional shape of a composite member to be placed onto a forming tool;
   selecting, based on the cross-sectional shape of the composite member, a stringer interface module compatible with the cross-sectional shape of the composite member;
   automatically coupling the stringer interface module to a vacuum control module of an end effector; and
   engaging the stringer interface module with the composite member.
2. The method of clause 1, further comprising:
   sending vacuum through the vacuum control module and into a first region of the stringer interface module to pick up the composite member.
3. The method of clause 2, further comprising:
   placing the composite member into contact with a forming surface of a forming tool while maintaining vacuum in the first region of the stringer interface module.
4. The method of clause 3, further comprising:
   sending vacuum through the vacuum control module and into a second region of the stringer interface module to compact the composite member against the forming surface of the forming tool.
5. The method of clause 4, further comprising:
   releasing vacuum from both the first region and the second region;
   driving the end effector to a storage area; and
   decoupling the stringer interface module from the end effector to place the stringer interface module in the storage area.
6. The method of any one of the preceding clauses, further comprising:
   decoupling the stringer interface module from the end effector after performing a pick and place operation using the stringer interface module; and
   automatically coupling a second stringer interface module having a different contact surface shape than the stringer interface module to the vacuum control module of the end effector.
7. The method of any one of the preceding clauses, wherein automatically coupling the stringer interface module to the vacuum control module comprises coupling using quick change connectors.
8. The method of any one of the preceding clauses, wherein automatically coupling the stringer interface module to the vacuum control module comprises magnetically coupling the stringer interface module to the vacuum control module.
9. The method of any one of the preceding clauses, wherein automatically coupling the stringer interface module to the vacuum control module comprises controlling a rotary locking mechanism by the end effector to couple the stringer interface module to the vacuum control module.
10. A method of placing a composite member comprising:
   automatically coupling a stringer interface module to a vacuum control module of an end effector;
   placing a composite member in contact with a forming surface of a forming tool using the end effector while sending vacuum through the vacuum control module to a first region of the stringer interface module;
   compacting the composite member against the forming tool by sending vacuum through the vacuum control module to a second region of the stringer interface module; and
   automatically removing the stringer interface module from the vacuum control module after compacting the composite member against the forming tool.
11. The method of clause 10, further comprising:
   automatically coupling a second stringer interface module having a different contact surface shape than the stringer interface module to the vacuum control module of the end effector.
12. The method of clause 10 or 11, wherein automatically coupling the stringer interface module to the vacuum control module comprises coupling using quick change connectors.
13. The method of any one of clauses 10-12, wherein automatically coupling the stringer interface module to the vacuum control module comprises magnetically coupling the stringer interface module to the vacuum control module.
14. The method of any one of clauses 10-13, wherein automatically coupling the stringer interface module to the vacuum control module comprises controlling a rotary locking mechanism by the end effector to couple the stringer interface module to the vacuum control module.
15. A vacuum compactor configured to pick and place composite members of different cross-sections comprising:
   a vacuum control module;
   a number of releasable connectors associated with the vacuum control module actuatable by an end effector comprising the vacuum control module; and
   a stringer interface module having a contact surface shape complementary to a composite member, configured to pick, place, and compress the composite member, and removably connectable to the vacuum control module by an end effector using the number of releasable connectors.
16. The vacuum compactor of clause 15, wherein the vacuum control module comprises a first region and a second region controllable to provide vacuum to different regions of the stringer interface module.
17. The vacuum compactor of clause 15 or 16, wherein the stringer interface module comprises a first region configured to lift a composite member, and a second region configured to compact the composite member.
18. The vacuum compactor of clause 17, wherein the stringer interface module comprises a raised face for an inlet of the second region.
19. The vacuum compactor of any one of clauses 15-18, wherein the number of releasable connectors comprises at least one of quick change connectors, magnets, or a rotary locking mechanism.
20. The vacuum compactor of any one of clauses 15-19, wherein the contact surface shape is complementary to a composite member having a hat-shaped cross-section.
21. A method of configuring an end effector comprising:
   determining a stringer interface module to mate with a composite member having a cross-sectional shape; and
   automatically coupling the stringer interface module to a vacuum control module of the end effector.
22. The method of clause 21, further comprising:
   selecting the stringer interface module from a plurality of stringer interface modules having varied contact surface shapes.

## Claims

1. A method (600) of picking a composite member (250) comprising:
determining (602) a cross-sectional shape of a composite member (250) to be placed onto a forming tool (246) ;
selecting (604), based on the cross-sectional shape of the composite member (250), a stringer interface module (214, 304, 403, 404, 504) compatible with the cross-sectional shape of the composite member (250);
automatically coupling (606) the stringer interface module (214, 304, 403, 404, 504) to a vacuum control module (208, 302, 402, 502) of an end effector (202); and
engaging (608) the stringer interface module (214, 304, 403, 404, 504) with the composite member (250).

2. The method (600) of claim 1, further comprising:
sending (612) vacuum (222) through the vacuum control module (208, 302, 402, 502) and into a first region (234, 312, 412, 512) of the stringer interface module (214, 304, 403, 404, 504) to pick up the composite member (250).

3. The method (600) of claim 2, further comprising:
placing (614) the composite member (250) into contact with a forming surface (248) of a forming tool (246) while maintaining vacuum (222) in the first region (234, 312, 412, 512) of the stringer interface module (214, 304, 403, 404, 504).

4. The method (600) of claim 3, further comprising:
sending (616) vacuum (222) through the vacuum control module (208, 302, 402, 502) and into a second region (236, 314, 414, 514) of the stringer interface module (214, 304, 403, 404, 504) to compact the composite member (250) against the forming surface (248) of the forming tool (246).

5. The method (600) of claim 4, further comprising:
releasing (618) vacuum (222) from both the first region (234, 312, 412, 512) and the second region (236, 314, 414, 514);
driving (620) the end effector (202) to an storage area (238); and
decoupling (622) the stringer interface module (214, 304, 403, 404, 504) from the end effector (202) to place the stringer interface module (214, 304, 403, 404, 504) in the storage area (238).

6. The method (600) of any one of the preceding claims, further comprising:
decoupling (624) the stringer interface module (214, 304, 403, 404, 504) from the end effector (202) after performing a pick and place operation (612, 632, 710, 716) using the stringer interface module (214, 304, 403, 404, 504); and
automatically coupling (626) a second stringer interface module (242) having a different contact surface shape (244) than the stringer interface module (214, 304, 403, 404, 504) to the vacuum control module (208, 302, 402, 502) of the end effector (202).

7. The method (600) of any one of the preceding claims, wherein:
(628) automatically coupling the stringer interface module (214, 304, 403, 404, 504) to the vacuum control module (208, 302, 402, 502) comprises coupling using quick change connectors (224); and/or
(630) automatically coupling the stringer interface module (214, 304, 403, 404, 504) to the vacuum control module (208, 302, 402, 502) comprises magnetically coupling the stringer interface module (214, 304, 403, 404, 504) to the vacuum control module (208, 302, 402, 502); and/or
(632) automatically coupling the stringer interface module (214, 304, 403, 404, 504) to the vacuum control module (208, 302, 402, 502) comprises controlling a rotary locking mechanism (228) by the end effector (202) to couple the stringer interface module (214, 304, 403, 404, 504) to the vacuum control module (208, 302, 402, 502).

8. A method (700) of placing a composite member (250) comprising:
automatically coupling (702) a stringer interface module (214, 304, 403, 404, 504) to a vacuum control module (208, 302, 402, 502) of an end effector (202);
placing (704) a composite member (250) in contact with a forming surface (248) of a forming tool (246) using the end effector (202) while sending vacuum (222) through the vacuum control module (208, 302, 402, 502) to a first region (234, 312, 412, 512) of the stringer interface module (214, 304, 403, 404, 504);
compacting (706) the composite member (250) against the forming tool (246) by sending vacuum (222) through the vacuum control module (208, 302, 402, 502) to a second region (236, 314, 414, 514) of the stringer interface module (214, 304, 403, 404, 504); and
automatically removing (708) the stringer interface module (214, 304, 403, 404, 504) from the vacuum control module (208, 302, 402, 502) after compacting the composite member (250) against the forming tool (246).

9. The method (700) of claim 8, wherein:
the method further comprises automatically coupling (710) a second stringer interface module (242) having a different contact surface shape (244) than the stringer interface module (214, 304, 403, 404, 504) to the vacuum control module (208, 302, 402, 502) of the end effector (202); and/or
(712) automatically coupling the stringer interface module (214, 304, 403, 404, 504) to the vacuum control module (208, 302, 402, 502) comprises coupling using quick change connectors (224); and/or
(714) automatically coupling the stringer interface module (214, 304, 403, 404, 504) to the vacuum control module (208, 302, 402, 502) comprises magnetically coupling the stringer interface module (214, 304, 403, 404, 504) to the vacuum control module (208, 302, 402, 502); and/or
(716) automatically coupling the stringer interface module (214, 304, 403, 404, 504) to the vacuum control module (208, 302, 402, 502) comprises controlling a rotary locking mechanism (228) by the end effector (202) to couple the stringer interface module (214, 304, 403, 404, 504) to the vacuum control module (208, 302, 402, 502).

10. A vacuum compactor (204, 300, 400, 500) configured to pick and place composite members of different cross-sections comprising:
a vacuum control module (208, 302, 402, 502);
a number of releasable connectors (210) associated with the vacuum control module (208, 302, 402, 502) actuable by an end effector (202) comprising the vacuum control module (208, 302, 402, 502); and
a stringer interface module (214, 304, 403, 404, 504) having a contact surface shape (230, 316, 416, 516) complementary to a composite member (250), configured pick, place, and compress the composite member (250), and removably connectable to the vacuum control module (208, 302, 402, 502) by an end effector (202) using the number of releasable connectors (210).

11. The vacuum compactor (204, 300, 400, 500) of claim 10, wherein:
the vacuum control module (208, 302, 402, 502) comprises a first region (216, 308, 408, 508) and a second region (218, 310, 410, 510) controllable to provide vacuum (222) to different regions of the stringer interface module (214, 304, 403, 404, 504); and/or
the stringer interface module (214, 304, 403, 404, 504) comprises a first region (234, 312, 412, 512) configured to lift a composite member (250), and a second region (236, 314, 414, 514) configured to compact the composite member (250); and/or
the stringer interface module (214, 304, 403, 404, 504) comprises a raised face for an inlet of the second region (236, 314, 414, 514).

12. The vacuum compactor (204, 300, 400, 500) of claim 10 or 11, wherein the number of releasable connectors (210) comprises at least one of quick change connectors (224), magnets (226), or a rotary locking mechanism (228).

13. The vacuum compactor (204, 300, 400, 500) of any one of claims 10-12, wherein the contact surface shape (230, 316, 416, 516) is complementary to a composite member (250) having a hat-shaped cross-section (232).

14. A method (800) of configuring an end effector comprising:
determining (802) a stringer interface module (214, 304, 403, 404, 504) to mate with a composite member (250) having a cross-sectional shape (256); and
automatically (804) coupling (606) the stringer interface module (214, 304, 403, 404, 504) to a vacuum control module (208, 302, 402, 502) of the end effector (202).

15. The method (800) of claim 14, further comprising:
selecting (806) the stringer interface module (214, 304, 403, 404, 504) from a plurality of stringer interface modules (241) having varied contact surface shapes.
